# EUROPÄISCHE PATENTSCHRIFT

(11) **EP 1 115 994 B1**
(45) Veröffentlichungstag und Bekanntmachung des Hinweises auf die Patenterteilung: **05.02.2003**
(21) Anmeldenummer: 99952386.3
(22) Anmeldetag: 13.08.1999
(51) Int. Cl.: F16L 1/024, F16L 59/153

(54) **VERFAHREN ZUM ERSTELLEN EINER OBERIRDISCHEN ROHRLEITUNG UND ENTSPRECHENDER SCHLAUCH**
METHOD FOR INSTALLING AN OVERGROUND PIPELINE AND CORRESPONDING TUBE
PROCEDE POUR REALISER UNE CANALISATION AERIENNE, ET TUBE CORRESPONDANT

(30) Priorität: 22.09.1998 DE 19843358
(43) Veröffentlichungstag der Anmeldung: 18.07.2001
(73) Patentinhaber: BKP Berolina Polyester GmbH & Co. KG, 13591 Berlin (DE)
(72) Erfinder: ODENWALD, Ralf, D-16727 Velten (DE)
(74) Vertreter: KOHLER SCHMID + PARTNER
(86) Internationale Anmeldenummer: DE9902534
(87) Internationale Veröffentlichungsnummer: WO00017557

(56) Entgegenhaltungen:
- US-A- 5 411 060

## Beschreibung

Die vorliegende Erfindung betrifft ein Verfahren zum Erstellen einer freiliegenden Rohrleitung sowie einen dafür geeigneten Schlauch mit einer aushärtbaren Wand.

Üblicherweise werden freiliegende Rohrleitungen, wie z.B. Wasserrohre oder Bewässerungsleitungen, durch einzelne aneinandergereihte und miteinander verbundene Rohrstücke gebildet.

Weiterhin ist es bekannt, nicht begehbare schadhafte Rohrleitungen mit sogenannten Relining-Verfahren zu sanieren, bei denen ein Neurohr vor Ort aus aushärtbaren Formmassen erstellt wird. Dazu wird ein mit aushärtbarem Kunstharz getränkter Schlauch in ein zu sanierendes Altrohr eingeführt, mittels Druckluft in Anlage an das Altrohr gepreßt und vor Ort ausgehärtet.

Durch die Druckbeaufschlagung von innen und das Anpressen außen an das Altrohr wird eine Aufdehnung des aushärtbaren Materials nach außen verhindert. Das dazwischen befindliche aushärtbare Material wird dabei verdichtet, wodurch eine bessere Produktqualität erzielt wird. Allerdings kann dieses Relining-Verfahren bei einer freiliegenden, z.B. oberirdischen Rohrleitung, bei der bis auf eine Auflagefläche keine äußere Anlage gegeben ist, wegen der ansonsten erfolgenden Aufdehnung und der damit verbundenenen mangelhaften Verdichtung nicht eingesetzt werden.

Es ist daher die Aufgabe der vorliegenden Erfindung, ein Verfahren anzugeben, mit dem - entsprechend dem Relining-Verfahren - auch freiliegende Rohrleitungen aus aushärtbaren Formmassen bei vergleichbarer Produktqualität hergestellt werden können, sowie einen entsprechenden Schlauch bereitzustellen.

Diese Aufgabe wird erfindungsgemäß gelöst durch ein Verfahren mit den folgenden Verfahrensschritten:
- Verlegen eines außen armierten, aushärtbaren Schlauchs;
- Beaufschlagen des Schlauchinnenraums mit Überdruck; und
- Aushärten des druckbeaufschlagten Schlauchs.

Der mit diesem Verfahren erzielte Vorteil besteht darin, daß ein solcher Schlauch im nicht ausgehärteten Zustand ein äußerst geringes Transportvolumen einnimmt und sich mit ihm größere Strecken in kürzester Zeit verlegen lassen. So lassen sich z.B. oberirdische Rohrleitungen für Bewässerungsprojekte in der Wüste herstellen oder die Wasserversorgung im Katastrophenfall sicherstellen. Weiterhin ist es im Gegensatz zu bekannten Relining-Verfahren möglich, in einem Altrohr auch ein Neurohr mit erheblich geringerem Durchmesser zu erstellen.

Sofern die aushärtbare Wand bereits unter Einwirkung von Tageslicht aushärtet, sollte die Verlegung des Schlauchs entweder nachts erfolgen, oder der Schlauch sollte bis nach seiner Verlegung durch eine entsprechende Verpackung vor Tageslicht geschützt sein.

Die Aushärtung durch Tageslicht bzw. durch den im Sonnenlicht enthaltenden UV-Anteil hat den Vorteil, daß der Schlauch z.B. in der Wüste nachts ausgebreitet und druckbeaufschlagt werden kann und dann tagsüber selbsttätig aushärten kann. Die Aushärtung kann, alternativ oder zusätzlich, auch durch die Wärme erfolgen, die sich im Schlauchinnenraum aufgrund von Lichteinstrahlung entwickelt. Selbstverständlich kann die Aushärtung auch durch externe Mittel, wie z.B. eine UV-Lampe oder Heizquelle, erfolgen, die nahe am Schlauch entlang oder im Schlauch bewegt werden.

Um die Einwirkung von Sonnenlicht auf den Aushärtevorgang noch zu verstärken, kann der Schlauch in weiterer Verfahrensausgestaltung auf einer Licht in Richtung auf den Schlauch reflektierenden Reflexionsbahn verlegt werden. Durch deren z.B. in Richtung auf den Schlauch gekrümmte Randbereiche kann mehr Sonnenlicht in Richtung auf den Schlauch reflektiert werden.

Um sicherzustellen, daß der Schlauch auf seinem Umfang möglichst homogen aushärtet, kann der Schlauch während des Aushärtens gedreht bzw. gewendet werden. Dieser Vorgang sollte mehrmals vom Bedienungspersonal durchgeführt.

Die oben genannte Aufgabe wird auch durch einen Schlauch mit einer aushärtbaren Wand gelöst, bei dem erfindungsgemäß eine Armierung die aushärtbare Wand umgibt.

Diese Armierung, die aus reißfestem Material, z.B. aus einer Bewehrung (Verstärkungsgeflecht), gebildet sein kann, dient für die aushärtbare flexible Wand des Schlauchs als das äußere Gegenlager, welches den Schlauch - wie das Altrohr beim Relining-Verfahren - an einer Aufdehnung hindert. Dadurch wird in der Schlauchwand Material verdichtet und läßt sich insgesamt eine bessere Produktqualität erreichen.

Es versteht sich, daß dieser Schlauch auch zu anderen Zwekken als nur zum Ausbilden einer freiliegenden Rohrleitung eingesetzt werden kann. So kann dieser armierte Schlauch auch zum Sanieren solcher Leitungen mittels Relining-Verfahren verwendet werden, bei denen eine gewisse Wandfestigkeit gefordert wird, z.B. bei Druckleitungen.

Weiterhin ist es von Vorteil, wenn die aushärtbare Wand auf einem Umfangsbereich außen von einer Licht in Richtung auf den Schlauch reflektierenden Reflexionsschicht umgeben ist. Im Gegensatz zur oben beschriebenen Reflexionsbahn ist die Reflexionsschicht Teil des Schlauches und kann radial außerhalb des aushärtbaren Materials z.B. entweder als separate (Halb)Lage innerhalb des Schlauches ausgebildet oder als Beschichtung an einer vorhandenen Schlauchlage angebracht sein.

Bei einer bevorzugten Ausführungsform ist die aushärtbare Wand von einem lichtundurchlässigen, vorzugsweise von einem für UV-Licht undurchlässigen UV-Schutz umgeben. Dieser UV-Schutz wird erst geöffnet bzw. entfernt, wenn der Schlauch in seine endgültige Lage verlegt worden ist.

Dabei ist es von besonderem Vorteil, wenn der UV-Schutz als entfernbare Schutzfolie ausgebildet ist. Für ein leichtes und einfaches Aufreißen und Entfernen sollte die Schutzfolie in Längsrichtung bereits perforiert sein.

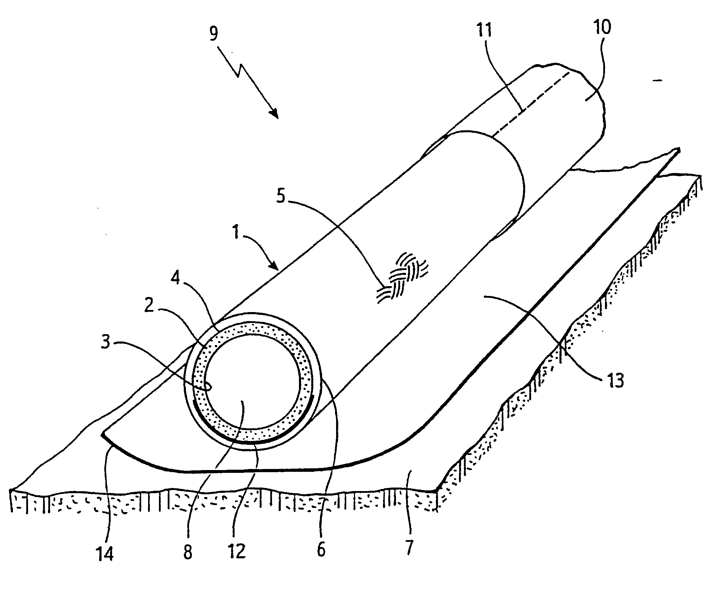

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

In der einzigen Figur ist ein vorderseitig aufgeschnittener erfindungsgemäßer Schlauch **1** mit einer aushärtbaren Wand **2** dargestellt. Diese Wand **2** ist durch zwei Folien **3**, **4** gebildet, zwischen denen sich das aushärtbare Material, z.B. ein Kunstharz befindet. Eine weitere, mit einer Armierung **5** versehene Folie **6** umgibt die Wand 2. Der Schlauch 1 wird frei auf einem Boden **7** verlegt und dann aufgerichtet, indem der Schlauchinnenraum **8** mit Druckluft beaufschlagt wird. Mittels Energie, z.B. UV-Licht und/oder Wärme, wird der Schlauch 1 schließlich zu einer formstabilen Rohrleitung **9** ausgehärtet. Dabei verhindert die Armierung 5, daß sich die Wand 2 während der Druckbeaufschlagung oder während der Aushärtung nach außen dehnen kann. Die Armierung 5 übernimmt folglich die Funktion einer Anlagewand, die beim Sanieren von schadhaften Rohrleitungen mit Relining-Verfahren vorhanden ist.

Der Schlauch 1 ist zum Schutz vor vorzeitigem Aushärten durch Sonnen- oder Tageslicht im Herstellungs- bzw. Lieferzustand von einer UV-Schutzfolie **10** umgeben, die vor dem Aushärten entfernt wird. Damit sich die Schutzfolie 10 leicht und einfach abziehen läßt, kann in die Schutzfolie 10 in Längsrichtung eine linienförmige Perforation **11** eingearbeitet sein.

Um die Wirkung des von oben einfallenden Sonnenlichts insbesondere im unteren Umfangsbereiches des Schlauches 1 zu verstärken, ist dort eine Reflexionsschicht **12** vorgesehen, die entweder eine separate (Halb)Lage innerhalb des Schlauches 1 ist oder außen an der äußeren Folie 4 angebracht ist. Außerdem ist der Schlauch 1 auf einer Reflexionsbahn **13** verlegt, deren nach innen gekrümmte Randbereiche **14** Sonnenlicht in Richtung auf den Schlauch 1 reflektieren und so den Aushärtevorgang beschleunigen.

Bei einem Verfahren zum Erstellen einer freiliegenden Rohrleitung (9) wird ein außen armierter, aushärtbarer Schlauch (1) verlegt, dann der Schlauchinnenraum (8) mit Überdruck beaufschlagt und schließlich der druckbeaufschlagte Schlauch (1) ausgehärtet. Der Schlauch (1) weist dazu neben einer aushärtbaren Wand (2) eine diese aushärtbare Wand (2) umgebende Armierung (5) auf. So können - entsprechend den bekannten Relining-Verfahren - auch freiliegende, z.B. oberirdische Rohrleitungen aus aushärtbaren Formmassen bei vergleichbarer Produktqualität hergestellt werden.

## Patentansprüche

1. Verfahren zum Erstellen einer freiliegenden Rohrleitung (9), **gekennzeichnet durch** folgende Verfahrensschritte:
- Verlegen eines außen armierten, aushärtbaren Schlauchs (1);
- Beaufschlagen des Schlauchinnenraums (8) mit Überdruck; und
- Aushärten des druckbeaufschlagten Schlauchs (1).

2. Verfahren nach Anspruch 1, **dadurch gekennzeichnet, daß** der Schlauch (1) oberirdisch verlegt wird.

3. Verfahren nach Anspruch 2, **dadurch gekennzeichnet, daß** der Schlauch (1) nachts verlegt wird.

4. Verfahren nach Anspruch 2 oder 3, **dadurch gekennzeichnet, daß** der Schlauch (1) mittels Tageslicht ausgehärtet wird.

5. Verfahren nach einem der vorhergehenden Ansprüche, **dadurch gekennzeichnet, daß** der Schlauch (1) auf einer Licht reflektierenden Reflexionsbahn (13) verlegt wird.

6. Verfahren nach einem der vorhergehenden Ansprüche, **dadurch gekennzeichnet, daß** der Schlauch (1) während des Aushärtens gedreht wird.

7. Verfahren nach einem der vorhergehenden Ansprüche, **dadurch gekennzeichnet, daß** der Schlauch (1) mittels künstlich erzeugter Energie ausgehärtet wird.

8. Schlauch (1) mit einer aushärtbaren Wand (2) zur Erstellung einer Rohrleitung (9), insbesondere zur Durchführung des Verfahrens nach einem der vorhergehenden Ansprüche,
**dadurch gekennzeichnet,**
**daß** eine Armierung (5) die aushärtbare Wand (2) umgibt.

9. Schlauch nach Anspruch 8, **dadurch gekennzeichnet, daß** die Armierung (5) als Folie (6) ausgebildet ist.

10. Schlauch nach Anspruch 8 oder 9, **dadurch gekennzeichnet, daß** die aushärtbare Wand (2) auf einem Umfangsbereich außen von einer Licht reflektierenden Reflexionsschicht (12) umgeben ist.

11. Schlauch nach einem der Ansprüche 8 bis 10, **dadurch gekennzeichnet, daß** die aushärtbare Wand (2) von einem lichtundurchlässigen, vorzugsweise von einem für UV-Licht undurchlässigen Schutz umgeben ist.

12. Schlauch nach einem der Ansprüche 8 bis 11, **dadurch gekennzeichnet, daß** der Schutz als entfernbare Schutzfolie (10) ausgebildet ist.

## Claims

1. Method for producing an exposed tubing (9) **characterized by** the following method steps:
- laying of an externally reinforced curable tube (1);
- loading the tube interior (8) with overpressure; and
- curing of the pressure-loaded tube (1).

2. Method according to claim 1, **characterized in that** the tube (1) is laid above ground.

3. Method according to claim 2, **characterized in that** the tube (1) is laid at night.

4. Method according to claim 2 or 3, **characterized in that** the tube (1) is cured through daylight.

5. Method according to any one of the preceding claims, **characterized in that** the tube (1) is laid on a reflecting sheet (13) which reflects light.

6. Method according to any one of the preceding claims, **characterized in that** the tube (1) is turned during curing.

7. Method according to any one of the preceding claims, **characterized in that** the tube (1) is cured through artificially generated energy.

8. Tube (1) comprising a curable wall (2) for producing a tubing (9) in particular for carrying out the method according to any one of the preceding claims, **characterized in that** the curable wall (2) is surrounded by a reinforcement (5).

9. Tube according to claim 8, **characterized in that** the reinforcement (5) is formed as a foil (6).

10. Tube according to claim 8 or 9, **characterized in that** a peripheral region of the curable wall (2) is externally surrounded by a reflecting layer (12) which reflects light.

11. Tube according to any one of the claims 8 through 10, **characterized in that** the curable wall (2) is surrounded by a protection which is light-impermeable, preferably impermeable for UV light.

12. Tube according to any one of the claims 8 through 11, **characterized in that** the protection is formed as removable protecting foil (10).

## Revendications

1. Procédé pour réaliser une conduite tubulaire (9) à découvert, **caractérisé par** les étapes de procédé suivantes :
- on pose un tuyau (1) durcissable armé à l'extérieur ;
- on attaque l'espace intérieur (8) du tuyau avec une surpression ; et
- on fait durcir le tuyau (1) mis sous pression.

2. Procédé selon la revendication 1, **caractérisé en ce que** le tuyau (1) est posé au-dessus du sol.

3. Procédé selon la revendication 2, **caractérisé en ce que** le tuyau (1) est posé pendant la nuit.

4. Procédé selon l'une ou l'autre des revendications 2 et 3, **caractérisé en ce que** le tuyau (1) est durci au moyen de la lumière du jour.

5. Procédé selon l'une des revendications précédentes, **caractérisé en ce que** le tuyau (1) est posé sur une bande réfléchissante (13) qui réfléchit la lumière.

6. Procédé selon l'une des revendications précédentes, **caractérisé en ce que** le tuyau (1) est tourné pendant le durcissement.

7. Procédé selon l'une des revendications précédentes, **caractérisé en ce que** le tuyau (1) est durci au moyen d'énergie artificielle.

8. Tuyau (1) avec une paroi (2) durcissable pour réaliser une conduite tubulaire (9), en particulier pour mettre en oeuvre le procédé selon l'une des revendications précédentes, **caractérisé en ce qu'**une armature (5) entoure la paroi (2) durcissable.

9. Tuyau selon la revendication 8, **caractérisé en ce que** l'armature (5) est réalisée sous forme de feuille (6).

10. Tuyau selon l'une ou l'autre des revendications 8 et 9, **caractérisé en ce que** sur une zone périphérique, la paroi durcissable (2) est entourée à l'extérieur par une couche réfléchissante (12) qui réfléchit la lumière.

11. Tuyau selon l'une des revendications 8 à 10, **caractérisé en ce que** la paroi (2) durcissable est entourée par une protection opaque, de préférence par une protection opaque à la lumière UV.

12. Tuyau selon l'une des revendications 8 à 11, **caractérisé en ce que** la protection est réalisée sous forme de feuille de protection (10) amovible.
